# EUROPÄISCHE PATENTSCHRIFT

(11) **EP 4 514 676 B1**
(45) Veröffentlichungstag und Bekanntmachung des Hinweises auf die Patenterteilung: **04.03.2026**
(21) Anmeldenummer: 23725812.4
(22) Anmeldetag: 28.04.2023
(51) Int. Cl.: B62D 53/08, B60D 1/62, B60D 1/01

(54) **KUPPLUNGSSYSTEM FÜR EIN ZUGFAHRZEUG**
COUPLING SYSTEM FOR A TOWING VEHICLE
SYSTÈME D'ACCOUPLEMENT POUR UN VÉHICULE TRACTEUR

(30) Priorität: 28.04.2022 DE 102022001493
(43) Veröffentlichungstag der Anmeldung: 05.03.2025
(73) Patentinhaber: JOST-Werke Deutschland GmbH, 63263 Neu-Isenburg (DE)
(72) Erfinder: ALGÜERA, José Manuel, 63739 Aschaffenburg (DE); FISCHER, Michael, 72202 Nagold (DE)
(74) Vertreter: Straubel, Dirk
(86) Internationale Anmeldenummer: PCT/IB2023/054424
(87) Internationale Veröffentlichungsnummer: WO 2023/209656

(56) Entgegenhaltungen:
- EP-A1- 3 792 165
- DE-A1- 102006 057 327
- DE-A1- 4 402 526

## Beschreibung

Die Erfindung betrifft ein Kupplungssystem für ein Zugfahrzeug mit einem Messelement gemäß der im Oberbegriff von Anspruch 1 stehenden Merkmale.

Derartige Kupplungssysteme dienen dazu, ein Anhängerfahrzeug lösbar mit einem Zugfahrzeug zu verbinden. Das Zugfahrzeug ist eine Sattelzugmaschine und das Anhängerfahrzeug ein Sattelauflieger, die in zusammengekuppeltem Zustand einen Sattelzug bilden. Auf der Sattelzugmaschine ist eine Sattelkupplungsplatte angebracht, in die zum Kuppeln des Sattelaufliegers ein an dessen Unterseite vorstehendes Kupplungsmittel in Form eines Königszapfens in die Sattelkupplung eingefahren wird.

In der Vergangenheit gab es bereits Bestrebungen, das Kupplungssystem mit einem Messelement auszustatten, um beispielsweise eine Kraftmessung vornehmen zu können. Die WO 2006/029731 A1 beschreibt eine Verschiebeeinrichtung für eine Sattelkupplung, die neben Positionssensoren auch einen Lastsensor enthalten kann, mit welchem die Auflast in Normalkraftrichtung feststellbar ist. Zwischen den Lagerböcken und dem Lagerabschnitt der Sattelkupplungsplatte ist eine Lagerschale angeordnet und der Lastsensor ist entweder innerhalb der Lageschale oder zwischen dem Lagerbock und der Lagerschale untergebracht. Dabei befindet sich das Messelement exakt über einer durch beide Lagerböcke verlaufenden Kippachse der Sattelkupplungsplatte. Zusammen mit den Positionssensoren kann dann die jeweilige Achslast für jede einzelne Achse einer vorgegebenen Achsenkonfiguration des Zugfahrzeugs bestimmt werden. Mit Hilfe des bekannten Messelementes ist es lediglich möglich, die von dem Sattelauflieger in Normalkraftrichtung eingeprägte Last zu messen.

Die DE 600 36 184 T2 schlägt eine kraftmessende Sattelkupplungs-Anordnung vor, bei welcher in eine zur Aufnahme des Lagerbocks vorgesehene Montagebox der Sattelkupplungsplatte eine Kraftmesseinheit eingesetzt ist. Die Kraftmesseinheit umfasst hierfür einen Körper mit einer auf seiner Unterseite halbzylindrisch geformten Fläche, die an einem komplementär dazu ausgeformten Befestigungsbügel abgestützt ist. In Vertiefungen des Körpers sind seitlich Sensoren zur Kraftmessung eingesetzt. Der wesentliche Nachteil dieser bekannten Anordnung liegt darin, dass der Körper einem hohen Verschleiß unterliegt und es bereits nach einer kurzen Betriebszeit zu verschleißbedingten Messfehlern kommt. Überdies sind bei einem Wechsel des Körpers stets auch die Sensoren nebst ihrer Verkabelung zu wechseln, was einen erheblichen Zeit- und Kostenaufwand bedeutet. Das Dokument EP 3 792 165 A1 offenbart ein bekanntes Kupplungssystem.

Der Erfindung lag daher die Aufgabe zugrunde, ein Kupplungssystem zu entwickeln, dessen Messelement einem deutlich geringeren Verschleißeinfluss unterliegt und auch nach längerer Betriebszeit nicht gewechselt zu werden braucht.

Die Aufgabe wird mit den Merkmalen des Anspruchs 1 gelöst. Unter dem Lagerungsbereich des Kupplungssystems wird der unmittelbar im Kraftfluss der Betriebskräfte liegender Bereich einer separaten Messschale verstanden, in welche das Messelement eingesetzt ist. Das hierfür verwendete Messelement kann insbesondere ein Dehnungsmessstreifen (DMS), ein resistiver Sensor, ein kapazitiver Sensor, ein Piezzoelement, ein Kraftmessbolzen, eine druckempfindliche Folie oder ein Messdübel sein. Bei einem Messdübel handelt es sich um einen in Querrichtung kraftempfindlichen Sensor, der typischerweise mit einer zylindrischen Form ausgebildet und in eine komplementär ausgeformte Ausnehmung in dem zu messenden Lagerungsbereich stets oder zumindest bei Vorliegen der zu erwartenden Betriebslast passgenau oder unter Vorspannung eingesetzt ist. Die Vorspannung des Messdübels wird beispielsweise mittels einer in den Messdübel integrierten Klemmvorrichtung realisiert.

Der Lagerungsbereich ist aus der Messschale gebildet, die zwischen einer zwischen dem Lagerbock und der Sattelkupplungsplatte angeordneten Lagerschale und der Sattelkupplungsplatte eingesetzt ist. Lagerschalen dienen als Verschleißteil und dämpfen eine Schwingungsübertragung von den Lagerböcken auf die Sattelkupplungsplatte. Bei den meisten Sattelkupplungsplatten sind die Lagerschalen in daran ausgeformte Aufnahmetaschen eingelegt. Aufgrund der funktionalen und strukturellen Trennung von Lagerschale und Messschale kann weiterhin eine konventionelle Lagerschale verwendet und nach Überschreiten der Verschleißgrenze gewechselt werden. Die ergänzend zu der Lagerschale zwischen dem Lagerbock und der Sattelkupplungsplatte zusätzlich eingesetzte Messschale trägt das oder die Messelement(e) und ist nicht oder nur in geringem Maße am Verschleiß beteiligt, so dass diese stets in ihrer vorgesehenen Position verbleiben kann und nicht gewechselt werden braucht. Typischerweise sind Messschale und Lagerschale flächig aneinandergelegt und stützen sich gegenseitig ab. Die Messschale und die Lagerschale überdecken beziehungsweise übergreifen beide den Lagerbock.

Von besonderem Interesse sind die fahrdynamischen Betriebskräfte (in x-, y- und z-Richtung) und die daraus resultierenden räumlichen Kraftvektoren an der Schnittstelle zwischen dem Zugfahrzeug und dem Anhängerfahrzeug, aus denen während der Fahrt auf die Zugkraft und etwaige Torsionsmomente um die Fahrzeuglängsachse sowie Querkräfte quer zur Fahrtrichtung geschlossen werden kann. Mit Hilfe dieser Betriebskräfte lässt sich insbesondere darauf schließen, ob das Anhängerfahrzeug augenblicklich im ziehenden Modus oder beispielsweise bei Bergabfahrt im schiebenden Modus betrieben ist. Ebenso kann durch die Erfassung der Betriebskräfte auf beispielsweise eine instabile Fahrsituationen bei zu schneller Kurvenfahrt geschlossen werden. Auch lassen sich an der Schnittstelle von Zugfahrzeug und Anhängerfahrzeug die im Fahrbetrieb auftretenden Betriebskräfte von Prüflasten aus besonderen Fahrzuständen wie zum Beispiel einer Unfallsituation eines umgekippten Anhängerfahrzeugs unterscheiden.

Die Lagerböcke dienen der Abstützung der Sattelkupplungsplatte gegenüber dem Zugfahrzeug und lassen eine Kippbewegung der Sattelkupplungsplatte um ihre Kippachse zu, die in Richtung der Querachse verläuft. Die Kippachse schneidet typischerweise den Verriegelungsbereich der Sattelkupplungsplatte. Alle auf die Sattelkupplungsplatte übertragenden Kräfte verteilen sich auf die beiden Lagerböcke, so dass eine Messung in diesem Bereich besonders fehlerfreie Messergebnisse liefert. Überdies handelt es sich bei den Lagerböcken und der Sattelkupplungsplatte um standardisierte Bauteile, so dass bei einer Umrüstung auf das erfindungsgemäße Kupplungssystem sowohl die Lagerböcke als auch die Sattelkupplungsplatte weiterverwendet werden könnten und lediglich die Messschale als zusätzliches Bauteil einzusetzen wäre.

Es ist bevorzugt, dass die Lagerschale und/oder Messschale eine einseitig offene U-Form aufweist, von welcher der Lagerbock aufgenommen ist. Die offene Seite der U-Form übergreift den Lagerbock, insbesondere dessen Kopfbereich. Die Außenseite(n) der U-förmigen Messschale liegt/liegen an der Sattelkupplungsplatte an und sind dadurch an der Übertagung der Betriebskräfte in der Längsachse und/oder der Querachse beteiligt.

Vorteilhafterweise ist von freien Enden der U-förmigen Lagerschale und/oder Messschale ein Kopfbereich des Lagerbock in der Längsachse und/oder der Querachse beidseitig übergriffen. Hieraus resultiert der Vorteil, dass die Lagerschale und die Messschale gegeneinander formschlüssig abgestützt sind. Überdies lassen sich in den freien Enden einer U-förmig ausgeformten Messschale ebenfalls Messelemente unterbringen, die insbesondere in der Längsachse auftretende Kräfte, sofern das oder die Messelemente in dem in der Längsachse den Lagerbock übergreifenden freien Ende angeordnet ist/sind, oder in der Querachse auftretende Kräfte, sofern das oder die Messelemente in dem in der Querachse den Lagerbock übergreifenden freien Ende angeordnet ist/sind, erfassen.

Erfindungsgemäß ist auf einer Unterseite der Sattelkupplungsplatte eine Aufnahmetasche ausgeformt, in welche die Lagerschale und Messschale eingesetzt sind. Die Aufnahmetasche ist insbesondere als eine nach unten offene Ausnehmung an der Sattelkupplungsplatte ausgeformt, in welche der Lagerbock zumindest teilweise hineinragt. Die Lagerschale und Messschale sind derart dimensioniert, dass sie von der Aufnahmetasche aufgenommen und in drei Raumrichtungen formschlüssig gehalten sind. Gemäß einer besonders günstigen Ausführungsform ist die Lagerschale von dem Lagerbock und die Messschale von der Sattelkupplungsplatte kontaktiert. Insofern besteht kein Kontakt der Messschale mit dem zugehörigen Lagerbock. Eine verschleißauslösende Relativbewegung findet ausschließlich zwischen dem Lagerbock und der zugehörigen, darauf aufliegenden Lagerschale statt. Die Messschale und die Lagerschale liegen einseitig mit ihren zugewandten Seiten aneinander an.

Zweckmäßigerweise sind die Lagerschale und die Messschale unmittelbar aneinander abgestützt. Insbesondere in einem über dem Lagerbock angeordneten Abschnitt sind die Lagerschale und die Messschale in Normalkraftrichtung übereinander angeordnet und dadurch beide an der Übertragung der Betriebskräfte beteiligt.

Vorteilhafterweise ist von dem mindestens einen Messelement eine Verformung des Lagerungsbereiches erfasst. Unter einer Verformung des Lagerungsbereiches wird insbesondere eine Längung oder Stauchung verstanden.

Besonders bevorzugt ist eine Ausführungsform, bei welcher in dem Lagerungsbereich eine Aufnahmeöffnung ausgebildet ist, in welche das Messelement eingesetzt ist. Bei der Aufnahmeöffnung handelt es sich um eine Bohrung oder allgemein um eine Öffnung in dem Material des Lagerungsbereiches.

Das in die Aufnahmeöffnung eingesetzte Messelement kann mechanisch in der Aufnahmeöffnung verspannt, verklebt oder eingegossen und dadurch kraftschlüssig mit dem zu messenden Lagerungsbereich verbunden sein. Die Aufnahmeöffnung schützt das Messelement und ermöglicht außerdem eine Positionierung in einem ansonsten nicht zugänglich aber mechanisch hoch belasteten Bereich, der einer besonders großen Verformung unterliegt und dadurch die Erfassung genauer Messwerte ermöglicht.

Zweckmäßigerweise ist das Messelement vollständig in die Aufnahmeöffnung eingesetzt und hierdurch von äußeren Einflüssen evakuiert.

Es hat sich als sinnvoll herausgestellt, wenn das Messelement mit einem die Aufnahmeöffnung umgebenden, ersten Wandabschnitt eines ersten Lagerungsbereiches bündig abschließt und durch Kontakt mit einem zweiten Wandabschnitt eines zweiten Lagerungsbereiches ein Kraftnebenschluss über das Messelement erfolgt. Diese Ausführungsform bietet sich insbesondere für eine Messung zwischen baulich separaten, einander angrenzenden Lagerungsbereichen mit ihren aufeinanderliegenden Wandabschnitten an. Das Messelement ist soweit in seiner zugehörigen Aufnahmeöffnung versenkt, dass neben dem Messelement ein Teil des von dem zweiten Lagerungsbereich übertragenen Kraftflusses direkt von dessen zweitem Wandabschnitt auf den ersten Wandabschnitt des ersten Lagerungsbereiches erfolgt und lediglich ein anderer, in der Regel geringerer Teil des Kraftflusses von dem zweiten Wandabschnitt des zweiten Lagerungsbereiches auf das Messelement und von dort auf den ersten Lagerungsbereich übertagen ist. Dieser Kraftnebenschluss schützt das Messelement vor einer Überlastung jenseits des vorgegebenen Messbereiches des Messelementes, da etwaige Überlasten von dem ersten auf den zweiten Wandabschnitt übertragen werden und an dem Messelement vorbeigeleitet sind. Überdies führt diese Ausführungsform zu noch präziseren Messergebnissen, da das Messelement einen weniger gespreizten Mesbereich aufzuweisen braucht und lediglich auf einen verhältnismäßig geringen Messbereich abgestimmt zu sein braucht.

Das Messelement kann so angeordnet sein, dass es resultierende Kräfte Fᵣₑₛ erfasst, deren Wirkrichtung unter einem Winkel α von bis zu 45° relativ zu einer Wirkrichtung der zu ermittelnden Betriebskräfte liegt. Das Messelement erfasst somit die in der jeweiligen Kraftrichtung besonders große zu erwartende Veränderung der Betriebskraft.

Vorzugsweise ist das mindestens eine Messelement mit einer mechanischen Vorspannung verbaut. Aufgrund der Vorspannung ist es möglich, mit dem Messelement sowohl eine Zunahme einer Betriebskraft als auch eine Abnahme der Betriebskraft zu erfassen, da das Messelement aufgrund der Vorspannung einen entsprechend verschobenen off-set seines Nullpunktes aufweist. Im gewöhnlichen Zugbetrieb würde das mit einer Vorspannung eingebaute Messelement eine Zunahme der Betriebskraft erfassen. Bei einer Bergabfahrt mit einem schiebenden Anhängerfahrzeug hingegen zeigt das Messelement einen geringeren Messwert an als zum Beispiel bei einem stehenden Zug- und Anhängerfahrzeug. Alternativ können auch zwei Messelemente verbaut sein, deren Wirkung sich so entfaltet, dass Betriebskräfte entlang eines Vektors richtungsabhängig in eine Wirkrichtung durch ein erstes Messelement und in die entgegengesetzte Wirkrichtung durch ein zweites Messelement erfasst werden.

Vorteilhafterweise sind mehrere Messelemente vorgesehen, von denen mindestens ein Messelement in der Längsachse vor und mindestens ein Messelement hinter der Kippachse der Sattelkupplungsplatte angeordnet sind. Hierdurch werden besonders effektiv Betriebskräfte in der Längsachse erfasst. Bei einer positiven Beschleunigung des Zugfahrzeugs wird das in der Längsachse in Fahrtrichtung vordere Messelement entlastet und das in der Längsachse in Fahrtrichtung hintere Messelement belastet. Bei einer negativen Beschleunigung des Zugfahrzeugs hingegen zeigt das in der Längsachse vordere Messelement einen höheren Messwert an und das in der Längsachse hintere Messelement einen niedrigeren Messwert.

Sofern mehrere Messelemente vorgesehen sind, kann ergänzend oder alternativ mindestens ein Messelement auf einer ersten Seite der Längsachse und mindestens ein Messelement auf einer gegenüberliegenden, zweiten Seite der Längsachse angeordnet sein. Bei dieser Konfiguration sind mindestens zwei Messelemente in Querrichtung auf gegenüberliegenden Seiten der Längsachse angebracht, wodurch besonders genau die Betriebskräfte in Richtung der Querachse erfasst sind. Bei einer Kurvenfahrt verwindet sich die Sattelkupplungsplatte, da der Sattelauflieger in Richtung der Kurvenaußenseite wankt. Die kurveninnenliegende erste Seite wird dabei angehoben und die kurvenaußenliegende zweite Seite nach unten belastet. Diese Verformungen der Sattelkupplungsplatte in der Hochachse werden besonders gut von den auf unterschiedlichen Seiten der Längsachse angeordneten Messelementen erfasst und zur Interpretation einer Kurvenfahrt verwendet.

Besonders sinnvoll ist es, wenn mindestens ergänzend oder alternativ zwei Messelemente auf einer ersten Seite der Längsachse angeordnet und zueinander in der Querachse beabstandet sind. Bei dieser Ausführungsform befinden sich zwei Messelemente ebenfalls in der Querrichtung versetzt zueinander, jedoch auf einer Seite der Längsachse. Diese Anordnung ermöglicht zunächst eine Anbringung von Messelementen auch bei beengten Einbauverhältnissen, wenn insbesondere eine zweite Seite der Längsachse durch einen Betätigungshebel, die Verschlussmechanik oder beispielsweise eine Schmieranlage belegt ist und für eine Unterbringung der Messelemente kein ausreichender Bauraum zur Verfügung steht. Überdies lässt diese Konfiguration eine noch treffsichere Interpretation der Verwindung der Sattelkupplungsplatte bei Kurvenfahrten zu.

Vorzugsweise ist das mindestens eine Messelement mit einem elektronischen Auswerteeinheit verbunden, mittels welcher aus einem von dem Messelement bereitgestellten Signal die Betriebskräfte und daraus resultierende Beschleunigungen berechnet sind.

Das oder die Messelement(e) können mittels Leitungen oder kabellos mit der elektronischen Auswerteeinheit verbunden sein. Die elektronische Auswerteeinheit kann außerdem an das Fahrzeugsteuergerät angeschlossen sein und Fahrdaten von diesem erhalten und/oder mit diesem austauschen. Auch ist es möglich, dass die elektronische Auswerteeinheit aufgrund der darin ermittelten Betriebskräfte Einfluss auf die Fahrzeugsteuerung nimmt, insbesondere auf die Motor- und Bremsleistung.

Die Energieversorgung des Messelementes kann mittels einer eigenen Batterie autark oder durch eine Versorgungsspannung aus dem Bordnetz oder der Auswerteeinheit erfolgen.

Zum besseren Verständnis wird die Erfindung nachfolgend anhand von drei Figuren näher erläutert. Es zeigen die
- **FIG. 1:**: eine Seitenansicht auf ein Kupplungssystem mit einer Sattelkupplungsplatte und einem Messelement an einer Messschale;
- **FIG. 2:**: einen Querschnitt durch eine Aufnahmetasche der Sattelkupplungsplatte mit mehreren in der Messschale angeordneten Messelementen und
- **FIG. 3:**: eine perspektivische Ansicht auf einen Lagerbock mit einer Lagerschale und einer Messschale mit mehreren darin integrierten Messelementen.

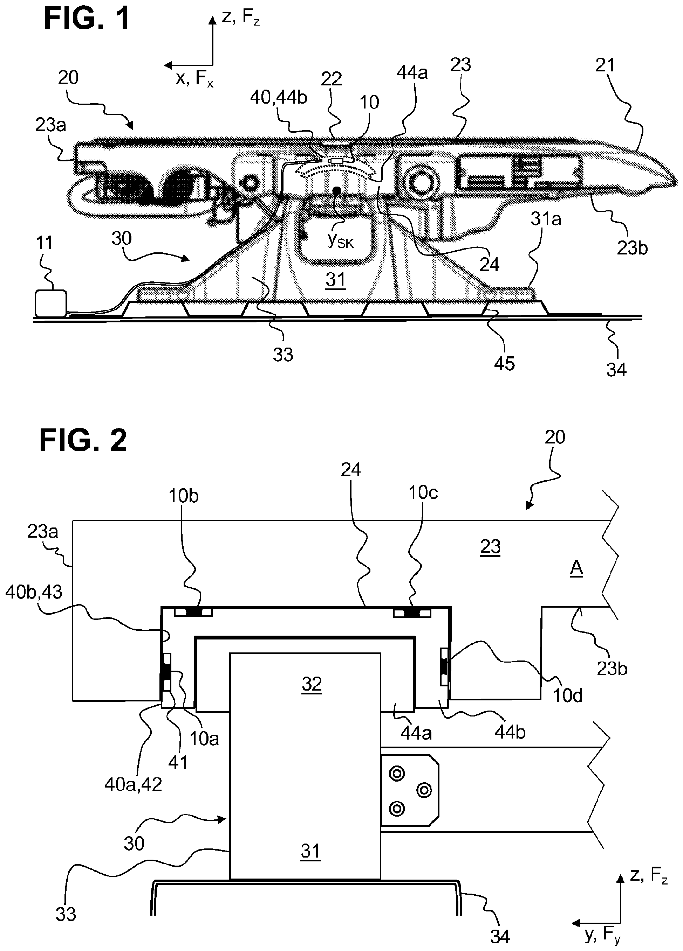

Die FIG. 1 zeigt in einer Seitenansicht ein Kupplungssystem mit einem Kupplungshauptkörper 20 in Form einer Sattelkupplungsplatte 23, welche mittels eines Kupplungslagerelementes 30 in Form von zwei in der Bildebene hintereinander angeordneten Lagerböcken 31 auf einer Montageplatte 45 befestigt ist. Jeder Lagerbock 31 ist hierfür an seinem in der Längsachse x vorderen und hinteren Ende mit einem Anschraubflansch 31a ausgebildet. Die Montageplatte 45 ist von oben auf ein Fahrzeugchassis 34 aufgelegt und ortsfest mit diesem verbunden.

Die Montageplatte 45 ist als einstückig, integrales Trapezblech ausgeformt und weist abschnittsweise auf dem Fahrzeugchassis 34 aufliegende Abschnitte und bezüglich des Fahrzeugchassis 34 beabstandete Abschnitte auf. In dem gezeigten Ausführungsbeispiel ist jeder Lagerbock 31 mit einer gerade zwischen den Anschraubflanschen 31a verlaufenden Unterkante ausgebildet, die lediglich die bezüglich des Fahrzeugchassis 34 beabstandeten Abschnitte der Montageplatte 45 kontaktiert.

Die Sattelkupplungsplatte 23 ist randseitig von einer Außenkontur 23a begrenzt und weist endseitig einen Einfahrbereich 21 auf, über welchen ein anhängerseitiges Kupplungsmittel in Richtung der Längsachse x in die Sattelkupplungsplatte 23 eingefahren und nach Erreichen seiner Endlage in einem zentrisch gelegenen Verriegelungsbereich 22 schwenkbar um eine Hochachse z gehalten ist. Auf einer Unterseite 23b der Sattelkupplungsplatte 23 greifen die Lagerböcke 31 an.

In dem gezeigten Ausführungsbeispiel ist ein Lagerungsbereich 40 aus einem in einer Messschale 44b angeordneten Messelement 10 gebildet. Das Messelement 10 ist beispielhaft an eine elektronische Auswerteeinheit 11 angeschlossen, welche aus den Messwerten des Messelementes 10 die in Echtzeit gemessene Betriebskraft Fₓ in der Längsrichtung x sowie die Betriebskraft F_{y} in der Querachse y und gegebenenfalls die Betriebskraft F_{z} in Richtung der Hochachse z ermittelt.

Es ist insbesondere auch möglich, dass die elektronische Auswerteeinheit 11 mit einem hier nicht gezeigten Fahrzeugsteuergerät kommuniziert und diesem die Betriebskräfte Fₓ, F_{y}, F_{z} bereitstellt.

Die FIG. 2 zeigt einen Querschnitt durch eine Seite der Sattelkupplungsplatte 23 längs einer Kippachse y_{SK} in FIG.1 mit einem darunter angeordneten Lagerbock 31. Ein Kopfbereich 32 des Lagerbocks 31 reicht bis in eine nach unten offene Aufnahmetasche 24 der Sattelkupplungsplatte 23 hinein, die auf der Unterseite 23b der Sattelkupplungsplatte 23 ausgeformt ist. Zwischen dem Kopfbereich 32 und den Anschraubflanschen 31a erstrecken sich im Wesentlichen vertikal ausgerichtete Wandungen 33 des Lagerbocks 31.

In die Aufnahmetasche 24 ist die Messschale 44b und eine Lagerschale 44a eingesetzt, die wiederum auf dem Kopfbereich 32 des Lagerbockes 31 aufliegt. Die Messschale 44b und die Lagerschale 44a sind beide mit einer U-Form gestaltet und übertragen infolge dessen auch Betriebskräfte F_{y} in Richtung der Querachse y.

In der Messschale 44b sind in einem ersten, der Aufnahmetasche 24 zugewandten Wandabschnitt 42 Aufnahmeöffnungen 41 für exemplarisch vier Messelemente 10a, 10b, 10c, 10d ausgeformt, die einen ersten Lagerungsbereich 40a bilden. Die Messelemente 10a, 10b, 10c, 10d schließen nach außen mit dem ersten Wandabschnitt 42 ab und liegen zusammen mit dem ersten Wandabschnitt 42 an der Aufnahmetasche 24 der Sattelkupplungsplatte 23 an. Die Aufnahmetasche 24 weist einen der Messschale 44b zugewandten, zweiten Wandabschnitt 43 auf, der einen zweiten Lagerungsbereich 40b bildet. Sowohl der erste Wandabschnitt 42 der Messschale 44b als auch die Messelemente 10a, 10b, 10c, 10d liegen an dem zweiten Wandabschnitt 43 der Aufnahmetasche 24 an, so dass es bei einer Kraftübertragung von der Sattelkupplungsplatte 23 auf die Messschale 44b zu einem über das Messelement 10a, 10b, 10c, 10d verlaufenden Kraftnebenschluss kommt.

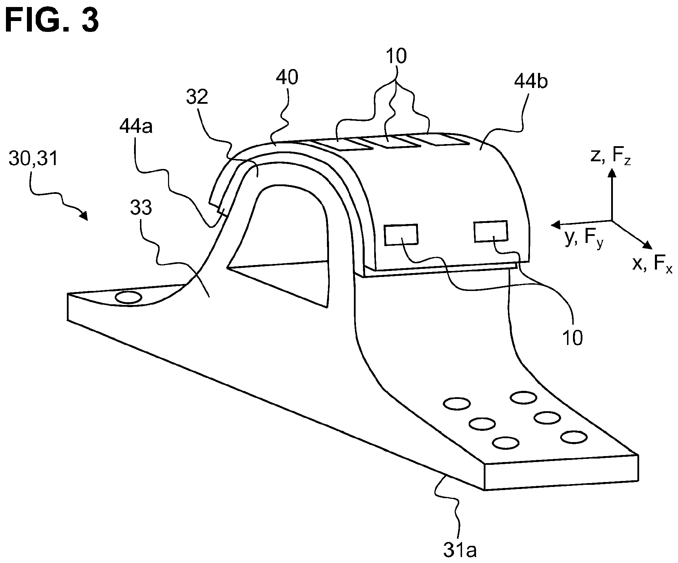

Die FIG. 3 zeigt eine perspektivische Ansicht auf einen Lagerbock 31 mit einer in dessen Kopfbereich 32 aufgesetzten Lagerschale 44a und einer diese nach außen überdeckende Messschale 44b, die den Lagerungsbereich 40 bildet. In die Messschale 44b sind mehrere Kraftmesselemente 10 eingesetzt.

Die in die Messschale 44b integrierten Messelemente 10 sind auf der bezüglich der Lagerschale 44a abgewandten Seite der Messschale 44b angeordnet, hierdurch keiner nennenswerten Relativbewegung gegenüber der Aufnahmetasche 24 (siehe FIG. 2) ausgesetzt und unterliegen dadurch kaum einem Verschleiß. Prinzipiell können die Messelemente 10 für einen noch besseren Schutz auch vollständig in die Messschale 44b integriert sein.

Grundsätzlich sind die Lagerschale 44a und die Messschale 44b stets mit einer komplementären Form versehen und liegen flächig aneinander an. Für eine Demontage der Lagerschale 44a, insbesondere im Falle eines fortgeschrittenen Verschleißes, braucht lediglich die Sattelkupplungsplatte 23 von den Lagerböcken 31 abgehoben und die Lagerschale 44a getauscht zu werden. Die Messschale 44b kann dagegen in der Aufnahmetasche 24 der Sattelkupplungsplatte 23 verbleiben und einfach auf die neu eingesetzte Lagerschale 44a aufgesetzt werden.

In dem Messschale 44b sind mehrere Messelemente 10 in Richtung der Querachse y versetzt zueinander angeordnet, wodurch um die Längsachse x auftretende Kippmomente bereits an einem der beiden Lagerböcke 31 messbar sind.

Darüber hinaus sind in der Messschale 44b auch mehrere Messelemente 10 in der Längsachse x versetzt zueinander angeordnet, wobei die in der Bildebene hinter dem Lagerbock 31 befindlichen Messelemente 10 verdeckt und dadurch nicht sichtbar sind.

Aufgrund der in der Längsachse x versetzten Anordnung der Messelemente 10 können besonders gut positive oder negative Beschleunigungen in der Längsachse x sowie daraus resultierende Kippmomente um die Querachse y erfasst werden.

### BEZUGSZEICHENLISTE

- 10: Messelement
- 10a: erstes Messelement
- 10b: zweites Messelement
- 10c: drittes Messelement
- 10d: viertes Messelement
- 11: elektronische Auswerteeinheit

- 20: Kupplungshauptkörper
- 21: Einfahrbereich
- 22: Verriegelungsbereich
- 23: Sattelkupplungsplatte
- 23a: Außenkontur Sattelkupplungsplatte
- 23b: Unterseite Sattelkupplungsplatte
- 24: Aufnahmetasche

- 30: Kupplungslagerelement
- 31: Lagerbock
- 31a: Anschraubflansch Lagerbock
- 32: Kopfbereich Lagerbock
- 33: Wandungen Lagerbock
- 34: Fahrzeugchassis

- 40: Lagerungsbereich
- 40a: erster Lagerungsbereich
- 40b: zweiter Lagerungsbereich
- 41: Aufnahmeöffnung Messelement
- 42: erster Wandabschnitt
- 43: zweiter Wandabschnitt
- 44a: Lagerschale
- 44b: Messschale
- 45: Montageplatte

- Fₓ: Kraft in Längsachse
- F_{y}: Kraft in Querachse
- F_{z}: Kraft in Hochachse
- x: Längsachse
- y: Querachse
- y_{SK}: Kippachse Sattelkupplungsplatte
- z: Hochachse

## Patentansprüche

1. Kupplungssystem für ein Zugfahrzeug mit einem Messelement (10), wobei das Kupplungssystem einen Kupplungshauptkörper (20) in Form einer Sattelkupplungsplatte (23) umfasst, an der ein in dessen Längsachse (x) liegender, konisch aufgeweiteter Einfahrbereich (21) zum Einführen eines anhängerseitigen Kupplungsmittels sowie ein sich daran anschließender Verriegelungsbereich (22) zum Halten des Kupplungsmittels in dem Kupplungshauptkörper (20) ausgebildet ist, und mindestens ein Kupplungslagerelement (30) in Form von zwei seitlich an der Sattelkupplungsplatte (23) angreifenden Lagerböcken (31) vorgesehen ist, mit welchen die Sattelkupplungsplatte (23) an dem Zugfahrzeug um eine quer zur Längsachse (x) verlaufenden Kippachse (y_{SK}) schwenkbar gelagert ist, wobei das Messelement (10) derart in einem Lagerungsbereich (40) des Kupplungssystems angeordnet ist, dass damit in der Längsachse (x) und/oder einer Querachse (y) wirkende Betriebskräfte (Fₓ, F_{y}) ermittelt sind,
wobei zwischen mindestens einem der Lagerböcke (31) und der Sattelkupplungsplatte (23) eine Lagerschale (44a) und eine Messschale (44b) angeordnet ist, wobei der Lagerungsbereich (40) aus der Messschale (44b) gebildet ist, und auf einer Unterseite der Sattelkupplungsplatte (23) eine Aufnahmetasche (24) ausgeformt ist, in welche die Lagerschale (44a) und die Messschale (44b) eingesetzt sind, **dadurch gekennzeichnet,**
**dass** die Lagerschale (44a) und die Messschale (44b) derart dimensioniert sind, dass sie von der Aufnahmetasche (24) aufgenommen und in drei Raumrichtungen formschlüssig gehalten sind.

2. Kupplungssystem nach Anspruch 1, **dadurch gekennzeichnet, dass** die Lagerschale (44a) und/oder Messschale (44b) eine einseitig offene U-Form aufweist, von welcher der Lagerbock (31) aufgenommen ist.

3. Kupplungssystem nach Anspruch 2, **dadurch gekennzeichnet, dass** von freien Enden der U-förmigen Lagerschale (44a) und/oder Messschale (44b) ein Kopfbereich (32) des Lagerbock (31) in der Längsachse (x) und/oder der Querachse (y) beidseitig übergriffen ist.

4. Kupplungssystem nach einem der Ansprüche 1 bis 3, **dadurch gekennzeichnet, dass** die Lagerschale (44a) von dem Lagerbock (31) und die Messschale (44b) von der Sattelkupplungsplatte (23) kontaktiert ist.

5. Kupplungssystem nach einem der Ansprüche 1 bis 4, **dadurch gekennzeichnet, dass** die Lagerschale (44a) und die Messschale (44b) unmittelbar aneinander abgestützt sind.

6. Kupplungssystem nach einem der Ansprüche 1 bis 5, **dadurch gekennzeichnet, dass** von dem mindestens einen Messelement (10) eine Verformung des Lagerungsbereiches (40) erfasst ist.

7. Kupplungssystem nach einem der Ansprüche 1 bis 6, **dadurch gekennzeichnet, dass** in dem Lagerungsbereich (40) eine Aufnahmeöffnung (41) ausgebildet ist, in welche das Messelement (10) eingesetzt ist.

8. Kupplungssystem nach Anspruch 7, **dadurch gekennzeichnet, dass** das Messelement (10) vollständig in die Aufnahmeöffnung (41) eingesetzt ist.

9. Kupplungssystem nach Anspruch 7, **dadurch gekennzeichnet, dass** das Messelement (10) mit einem die Aufnahmeöffnung (41) umgebenden, ersten Wandabschnitt (42) eines ersten Lagerungsbereiches (40a) bündig abschließt und durch Kontakt mit einem zweiten Wandabschnitt (43) eines zweiten Lagerungsbereiches (40b) ein Kraftnebenschluss über das Messelement (10) erfolgt.

10. Kupplungssystem nach einem der Ansprüche 1 bis 9, **dadurch gekennzeichnet, dass** das mindestens eine Messelement (10) unter mechanischer Vorspannung verbaut ist.

11. Kupplungssystem nach einem der Ansprüche 1 bis 10, **dadurch gekennzeichnet, dass** mehrere Messelemente (10, 10a, 10b) vorgesehen sind, von denen mindestens ein Messelement (10a) in der Längsachse (x) vor und mindestens ein Messelement (10b) hinter der Kippachse (y_{SK}) angeordnet sind.

12. Kupplungssystem nach einem der Ansprüche 1 bis 10, **dadurch gekennzeichnet, dass** mindestens zwei Messelemente (10, 10a, 10d) auf einer Seite der Längsachse (x) angeordnet und zueinander in Richtung der Querachse (y) beabstandet sind.

## Claims

1. A coupling system for a towing vehicle, comprising a measuring element (10), wherein the coupling system comprises a coupling main body (20) in the form of a fifth-wheel coupling plate (23), on which a conically widened insertion region (21) that is located in the longitudinal axis (x) of said plate is formed for the introduction of a trailer-side coupling means and a locking region (22) adjoining it for holding the coupling means in the coupling main body (20), and at least one coupling bearing element (30) is provided with two bearing blocks (31) that engage laterally on the fifth-wheel coupling plate (23) and by means of which the fifth-wheel coupling plate (23) is mounted on the towing vehicle so as to be pivotable about a tilting axis (y_{SK}) extending transversely to the longitudinal axis (x), the measuring element (10) is situated in a mounting region (40) of the coupling system such that operating forces (Fₓ, F_{y}) acting in the longitudinal axis (x) and/or in a transverse axis (y) are determined, wherein a bearing shell (44a) and a measuring shell (44b) are situated between at least one of the bearing blocks (31) and the fifth-wheel coupling plate (23), the mounting region (40) being formed from the measuring shell (44b), and a receiving pocket (24) is formed on an underside of the fifth-wheel coupling plate (23), into which the bearing shell (44a) and the measuring shell (44b) are inserted, **characterized in that**
the bearing shell (44a) and the measuring shell (44b) are dimensioned such that they are received by the receiving pocket (24) and are held in a form-fitting manner in three spatial directions.

2. The coupling system according to claim 1, **characterized in that** the bearing shell (44a) and/or measuring shell (44b) has a U-shape that is open on one side and which accommodates the bearing block (31).

3. The coupling system according to claim 2, **characterized in that** a head region (32) of the bearing block (31) is overlapped on both sides in the longitudinal axis (x) and/or the transverse axis (y) by free ends of the U-shaped bearing shell (44a) and/or measuring shell (44b).

4. The coupling system according to one of claims 1 to 3, **characterized in that** the bearing shell (44a) is contacted by the bearing block (31) and the measuring shell (44b) is contacted by the fifth wheel coupling plate (23).

5. The coupling system according to one of claims 1 to 4, **characterized in that** the bearing shell (44a) and the measuring shell (44b) are supported directly on one another.

6. The coupling system according to one of claims 1 to 5, **characterized in that** a deformation of the mounting region (40) is detected by the at least one measuring element (10).

7. The coupling system according to one of claims 1 to 6, **characterized in that** a receiving opening (41) is formed in the mounting region (40), into which the measuring element (10) is inserted.

8. The coupling system according to claim 7, **characterized in that** the measuring element (10) is completely inserted into the receiving opening (41).

9. The coupling system according to claim 8, **characterized in that** the measuring element (10) is flush with a first wall section (42) of a first bearing area (40a) surrounding the receiving opening (41), and a force shunt is effected via the measuring element (10) by contact with a second wall section (43) of a second bearing area (40b).

10. The coupling system according to one of claims 1 to 9, **characterized in that** the at least one measuring element (10) is installed under mechanical prestress.

11. The coupling system according to one of claims 1 to 10, **characterized in that** several measuring elements (10, 10a, 10b) are provided, of which at least one measuring element (10a) is arranged in front of the longitudinal axis (x) and at least one measuring element (10b) is arranged behind the tilting axis (y_{SK}).

12. The coupling system according to one of claims 1 to 10, **characterized in that** at least two measuring elements (10, 10a, 10d) are arranged on one side of the longitudinal axis (x) and are spaced from one another in the direction of the transverse axis (y).

## Revendications

1. Système d'accouplement pour un véhicule tracteur doté d'un élément de mesure (10), dans lequel le système d'accouplement comprend un corps principal d'accouplement (20) sous la forme d'une plaque d'accouplement de type sellette (23), sur lequel est formée une zone d'entrée (21) s'élargissant de manière conique et s'étendant selon son axe longitudinal (x) pour l'introduction d'un moyen d'accouplement côté remorque, ainsi qu'une zone de verrouillage (22) adjacente destinée à maintenir le moyen d'accouplement dans le corps principal d'accouplement (20), et au moins un élément de support d'accouplement (30) est prévu sous la forme de deux supports de palier (31) agissant latéralement sur la plaque d'accouplement de type sellette (23), grâce auxquels la plaque d'accouplement de type sellette (23) est montée de manière pivotante sur le véhicule tracteur autour d'un axe de basculement (y_{SK}) s'étendant transversalement à l'axe longitudinal (x), dans lequel l'élément de mesure (10) est disposé dans une zone de palier (40) du système d'accouplement, de sorte qu'il permette de déterminer les forces de fonctionnement (Fₓ, F_{y}) agissant dans l'axe longitudinal (x) et/ou un axe transversal (y), dans lequel une coquille de palier (44a) et une coquille de mesure (44b) sont disposées entre au moins l'un des supports de palier (31) et la plaque d'accouplement de type sellette (23), dans lequel la zone de palier (40) est formée par la coquille de mesure (44b), et une cavité de réception (24) est aménagée sur une face inférieure de la plaque d'accouplement de type sellette (23), cavité dans laquelle la coquille de palier (44a) et la coquille de mesure (44b) sont insérées, **caractérisé en ce que,**
la coquille de palier (44a) et la coquille de mesure (44b) sont dimensionnées de manière à être reçues par la cavité de réception (24) et maintenues par complémentarité de forme dans les trois directions de l'espace.

2. Système d'accouplement selon la revendication 1, **caractérisé en ce que** la coquille de palier (44a) et/ou la coquille de mesure (44b) présente une forme en U ouverte d'un côté, dans laquelle est logé le support de palier (31).

3. Système d'accouplement selon la revendication 2, **caractérisé en ce que** les extrémités libres de la coquille de palier (44a) et/ou de la coquille de mesure (44b) en forme de U englobent de part et d'autre une partie de tête (32) du support de palier (31) dans l'axe longitudinal (x) et/ou l'axe transversal (y).

4. Système d'accouplement selon l'une quelconque des revendications 1 à 3, **caractérisé en ce que** la coquille de palier (44a) est en contact avec le support de palier (31) et que la coquille de mesure (44b) est en contact avec la plaque d'accouplement de type sellette (23).

5. Système d'accouplement selon l'une quelconque des revendications 1 à 4, **caractérisé en ce que** la coquille de palier (44a) et la coquille de mesure (44b) sont directement en appui l'un contre l'autre.

6. Système d'accouplement selon l'une quelconque des revendications 1 à 5, **caractérisé en ce qu'une** déformation de la zone de palier (40) est détectée par l'au moins un élément de mesure (10).

7. Système d'accouplement selon l'une quelconque des revendications 1 à 6, **caractérisé en ce qu'une** ouverture de réception (41) est formée dans la zone de palier (40), ouverture dans laquelle est inséré l'élément de mesure (10).

8. Système d'accouplement selon la revendication 7, **caractérisé en ce que** l'élément de mesure (10) est inséré complètement dans l'ouverture de réception (41).

9. Système d'accouplement selon la revendication 7, **caractérisé en ce que** l'élément de mesure (10) est affleurant avec un premier tronçon de paroi (42) d'une première zone de palier (40a) entourant l'ouverture de réception (41), et qu'un chemin de force secondaire est établi par l'intermédiaire de l'élément de mesure (10) par contact avec un second tronçon de paroi (43) d'une seconde zone de palier (40b).

10. Système d'accouplement selon l'une quelconque des revendications 1 à 9, **caractérisé en ce que** l'au moins un élément de mesure (10) est monté sous précontrainte mécanique.

11. Système d'accouplement selon l'une quelconque des revendications 1 à 10, **caractérisé en ce que** plusieurs éléments de mesure (10, 10a, 10b) sont prévus, dont au moins un élément de mesure (10a) est disposé en avant et au moins un élément de mesure (10b) en arrière de l'axe de basculement (y_{SK}) dans l'axe longitudinal (x).

12. Système d'accouplement selon l'une quelconque des revendications 1 à 10, **caractérisé en ce qu'au** moins deux éléments de mesure (10, 10a, 10d) sont disposés d'un même côté de l'axe longitudinal (x) et espacés l'un de l'autre dans la direction de l'axe transversal (y).
